# EUROPEAN PATENT SPECIFICATION

(11) **EP 2 823 368 B1**
(45) Date of publication and mention of the grant of the patent: **18.07.2018**
(21) Application number: 13720529.0
(22) Date of filing: 06.03.2013
(51) Int. Cl.: G05B 19/404, F16F 15/023, G05D 19/02, F16F 15/00, E04G 21/04

(54) **METHOD TO CONTROL THE VIBRATIONS OF AN ARTICULATED ARM AND CORRESPONDING APPARATUS**
VERFAHREN ZUR STEUERUNG DER VIBRATIONEN EINES GELENKARM UND ZUGEHÖRIGE VORRICHTUNG
PROCÉDÉ POUR RÉGULER LES VIBRATIONS D'UN BRAS ARTICULÉ ET APPAREIL CORRESPONDANT

(30) Priority: 07.03.2012 IT MI20120362
(43) Date of publication of application: 14.01.2015
(73) Proprietor: Cifa S.P.A., 20030 Senago, Milano (IT)
(72) Inventor: MAINI, Paolo, Dario, I-20052 Monza (IT); MOSTOSI, Vittorio, I-22063 Cantu' (IT); MANTINEO, Massimo, I-20023 Cerro Maggiore (IT)
(74) Representative: Petraz, Gilberto Luigi
(86) International application number: PCT/IB2013/000306
(87) International publication number: WO 2013/132303

(56) References cited:
- EP-A1- 2 067 911
- EP-A1- 2 347 988
- EP-A2- 2 103 760
- US-A1- 2004 076 502

## Description

### FIELD OF THE INVENTION

The present invention concerns a method and an apparatus to control the vibrations of an articulated arm.

More in particular, the present invention is applied to reduce the vibrations to which the various segments of articulated arms are subjected, used, for example, for pumping concrete in operating machines, such as for example pumps transported on trucks or concrete mixers or similar, whether or not they are mounted on wagons or trucks.

### BACKGROUND OF THE INVENTION

Heavy work vehicles are known, used in the building sector, normally consisting of a truck on which an extendable and/or telescopically extractable arm is mounted, articulated for the distribution and the casting of concrete.

The extendable arms of the known type consist of a plurality of segments pivoted with respect to each other and foldable one over the other, so as to be able to assume a folded configuration close up to the truck for transport purposes, and work configurations which allow them to reach areas very distant from the truck.

One of the most important characteristics of these extendable arms is that they are able to reach the greatest heights and/or lengths possible, in order to guarantee maximum flexibility and versatility in use with the same truck.

The increase in the number of articulated segments, or the lengthening of the measurement of each one of them, on the one hand entails the possibility of obtaining greater overall lengths in the maximum extension, but on the other hand entails an increase in weights and bulk that negatively affect the practicality and functionality of the vehicle.

It is also known that a very serious disadvantage in the correct functioning of such arms, which becomes even more serious as the overall length of the arm and the number of segments thereof increases, is the phenomenon of vibrations to which the arm is subjected when it is moved and the concrete is delivered. These vibrations entail considerable operating difficulties both for the operator responsible for manually positioning and directing the pipe through which the concrete exits, and also for the operator who moves the arm by remote control.

The type of these machines and the corresponding characteristics of thinness, inertia and elasticity, have a decisive influence on the entity of the vibrations, since the modes of vibration of the machine itself depend upon them.

In use, the machine works by moving from one configuration of the arm to another. Furthermore, the forced impulsive functioning associated with the piston pump used for pumping the concrete often occurs at frequencies near to those of the machine itself. These effects imply that the vibration modes of the machine, although at different intensities, are continuously excited, generating dynamic variations on the state of stress of the joints and in the material which limit the working life of the machine and reduce safety for the operators.

Document US-A1-2004/0076502 (US'502) describes an articulated arm for pumps transported on trucks, in which a control system is installed for damping vibrations. The control system described therein provides to monitor a parameter that describes the disturbances that lead to a deviation of the position of the arm with respect to a predefined position, for example the determination of the fluctuation in the pressure of the concrete in the distribution pipe, and the load supported by at least one of the units that move the segments of arm.

The control system described in US'502 comprises means to minimize the vibrations that use the load sustained by one of the units as entrance data and emit as exit data a control parameter for the unit that moves the arms.

The control logic described in US'502 uses a so-called target value that defines the desired position of the hydraulic cylinder and hence also the desired position of the segment of arm that is made to oscillate by the respective hydraulic cylinder. Furthermore, a load condition expected on the cylinder is predicted, that is, it is predicted whether the cylinder will be subjected to a bigger or smaller load, and based on this the target value to which the position of the segment must be taken, by means of an overlap device of a variable disturbance, is modified and corrected. Then, on this corrected value, the action of the means to minimize the vibrations is applied and combined, based on the comparison between an estimated load and an actual load detected by pressure detection means associated with the chambers of the actuator cylinders. EP 2.067.911 discloses another vibration suppression method that makes use of a vibration suppression cylinder coupled to the boom cylinder.

This solution, using both an estimation of values and also external reference target values to be attained, requires a complex and sophisticated control logic, in which the target value to be reached is followed by a delay ring, taking into account a difference between the value estimated predictively and the actual value found by means of the detections of the sensors.

This solution, as well as weighing down the control circuit due to the calculation complexities, also determines a delay line that makes the system for damping the vibrations rather slow in reacting to situations that vary greatly over time.

One purpose of the present invention is to perfect a method to control vibrations that allows to correct and compensate, substantially in real time, the vibrations of the articulated arm during its movements for the correct positioning of the articulated arm and during the operations to pump the concrete.

Another purpose of the present invention is to obtain an apparatus to control the vibrations of an articulated arm that is simple, economical, extremely rapid in reacting to situations that vary greatly over time, and suitable to work in onerous functioning conditions that occur during the pumping of the concrete.

Another purpose is to obtain a control method and apparatus that does not use predictive techniques or external references to be attained, but obtains the control directly, by recognizing and then canceling the disturbance component in the movement of the arm due to vibrations.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purposes, a method to control vibrations according to the present invention, is applied to an articulated arm comprising a plurality of articulated segments, each associated to a corresponding actuator. The actuators, in their turn, are drivable, on the command of an operator, by means of a hydraulic drive circuit, to make the articulated arm assume a desired configuration such as to allow it to reach a working seating, for example for casting the concrete.

According to one feature of the present invention, during and after the normal movement of the articulated arm, or at least some of its segments, and/or during the pumping step of the concrete determined by the operator, at least a first step is provided to detect the development and entity of the force acting on at least one of the actuators because of the vibrations, and a second step, carried out substantially in real time, during which a processing and command device, as a function of the value of said force detected, commands the drive of a hydraulic control circuit, which is connected fluidically at least to the actuator considered in order to determine the damping of said force due to vibrations.

Detection means are associated to the actuator considered, in order to detect, directly or indirectly, the forces acting on it, and which are caused by the vibratory phenomenon triggered by the movements of the articulated arm, by the inertia in play and possibly, in the case of pumps transported on trucks, also by the vibrations induced because of the pumping of the concrete.

An important characteristic of the control logic according to the present invention is that, so that the control system intervenes, the forces detected in the actuator and due to the vibrations must be different from zero; in other words, the control logic according to the present invention is not based on predictive techniques, nor on external references to be attained, but verifies in real time the existence of pressure forces which determine a differential force in the chambers of the actuator and creates a control action which tends to cancel said differential force.

As a function of the entity and development of the force detected by the detection devices, the processing and control device provides to suitably drive the hydraulic control circuit, in order to feed/discharge work fluid alternately from the actuator so as to dampen the vibrations triggered.

It is advantageous to provide that the method according to the present invention is applied to all the actuators of the articulated arm so as to reduce the damping times of the vibrations and increase the control efficiency.

Moreover, the resultant apparatus to control the vibrations can easily be integrated on board both new and existing machines, and also allows to adapt the apparatus to the particular needs which arise on each occasion.

In accordance with another feature of the invention, during the first detection step the development and entity of a first pressure and a second pressure acting respectively in a first chamber and a second chamber of the actuator considered is detected.

Pressure detectors are associated to each actuator to detect the development and entity of the pressures acting in each of the chambers of the actuator. During the movement of the articulated arm determined by the operator, and during the pumping of the concrete, the work fluid present in the chambers of the actuator is subjected to a determinate pressure due to the weight of the articulated arm, the possible masses in movement and the vibratory phenomenon. The oscillations of the pressure which are detected in the chambers of the actuator are ascribable to the vibrations to which the articulated arm is subjected. The processing and control device is suitable in its turn, substantially in real time, to filter only the component due to the vibrations to determine the actions which must be carried out on the hydraulic control circuit.

According to another feature of the invention, the method provides that, as a function of the geometric properties of the actuator considered, a first force and a second force acting respectively in the first and in the second chamber are determined, and the processing and control device, processing the development and entity of the first force and of the second force, determines the component of said force due only to the vibrations acting on the actuator.

In accordance with a variant embodiment, the detection devices, comprise load cells or extensometers which are associated, for example, to the ends of the actuator to carry out a direct detection of the temporal development and entity of the forces due to the vibrations acting on the actuator.

According to one form of embodiment of the present invention, an electro-valve is associated to the actuator, fluidically connected with the control circuit, and possibly also cooperating with the main feed circuit provided for the normal movement of the articulated arm. Moreover, the method provides that in said second step, the processing and control device sends electric signals depending on the temporal development of the force determined and due to the vibrations, for switching said electro-valve, in order to allow the intervention of the control circuit on the actuator and obtain the damping of the vibrations.

In accordance with another feature of the invention, following the normal movement of the articulated arm, and during the first and second step, a step is provided to control the position and configuration assumed by the articulated arm determined by the operator. It is therefore possible, following the damping interventions of the vibrations due to the hydraulic control circuit, to prevent the articulated arm from assuming a configuration unwanted by the operator. In particular, this control of the position and configuration of the arm uses information relating to the angles formed between the segments of the arm in order to intervene if the control system of the vibrations determines a reciprocal position of the segments which is not correct on the basis of the drive actions imparted by the operator.

In accordance with one form of embodiment, sensors, for example inclinometers, are associated with at least some of the segments of the articulated arm, suitable to detect their position and transmit it to the processing and command device in order to determine the configuration assumed by the articulated arm. Indeed, the method provides that during the control step, the processing and control device detects the signals coming from the sensors.

In accordance with another form of embodiment, in the control step the deviation is determined between the position of the articulated arm or at least part of its segments, determined by the operator, and the instantaneous position of the articulated arm or of the segments, and, if a deviation is determined, the processing and control device determines an action on the hydraulic control circuit in order to keep the articulated arm in the position determined by the operator. It is advantageous to provide ranges of tolerance in the movement, inside which the configuration of the articulated arm can vary without needing to activate the step of controlling the position and configuration assumed by the articulated arm.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a partial and schematic representation of an apparatus to control vibrations applied to an articulated arm;
- fig. 2 is a schematic representation of an apparatus to control vibrations according to the present invention.

To facilitate comprehension, the same reference numbers have been used, where possible, to identify identical common elements in the drawings.

### DESCRIPTION OF ONE FORM OF EMBODIMENT

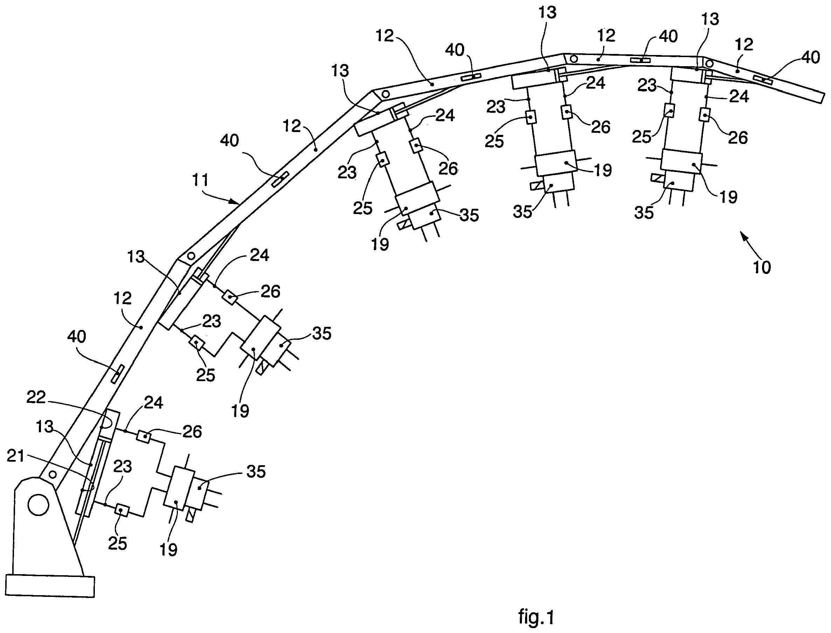

With reference to fig. 1, an apparatus to control vibrations according to the present invention is indicated in its entirety by the reference number 10 and is applied to an articulated arm 11 provided with a plurality of segments 12, in this case five segments articulated with respect to each other by respective actuators 13 of the double effect type.

The articulated arm 11, by way of example an arm for distributing concrete, can be installed on a motor vehicle, not shown in the drawings, which allows it to be transported on roads.

The articulated arm 11 is suitable to assume at least a first closed operating condition, in which the individual segments 12 are folded one over the other in a configuration of minimum bulk for transport on roads, and a second extended operating condition, in which the segments 12 assume a configuration desired by the operator in order to reach, for example, a site where the concrete is cast.

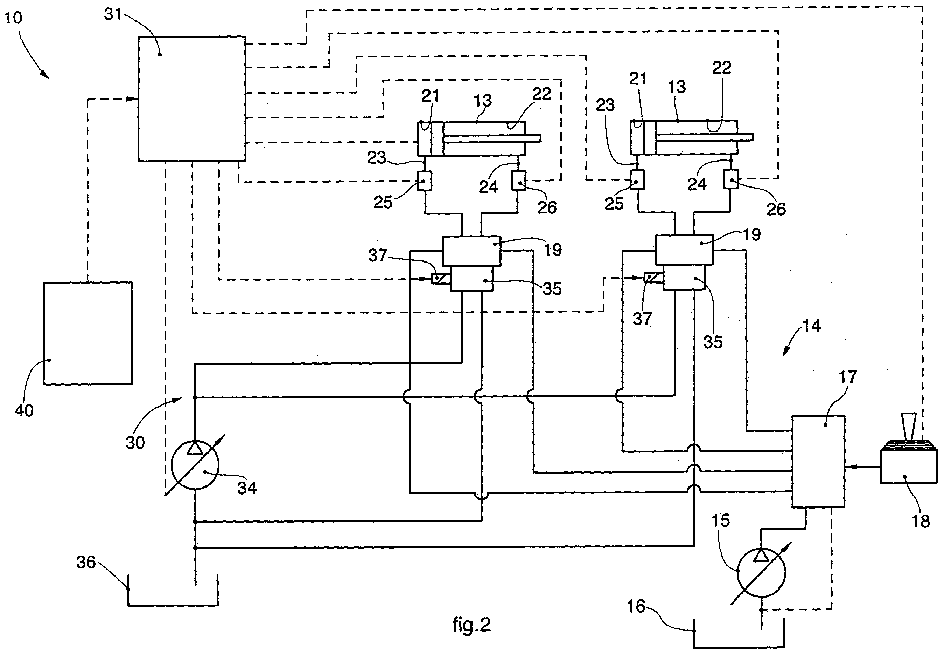

The actuators 13 (fig. 2) are driven, in the known way, by a feed circuit 14 of the hydraulic type which comprises an oil-dynamic pump 15, a tank 16 and a control unit 17 commanded by an operator using command means, in this case represented by a joystick 18. The control unit 17 is suitable to feed each of the actuators 13 by means of respective distributor valves 19, each of which is fluidically connected to the individual actuator 13.

Each of the actuators 13 comprises a first chamber 21 and a second chamber 22, separated from each other by the head of a plunger, and each provided with first ports 23 and second ports 24 to feed/discharge the work fluid.

First pressure sensors 25 and second pressure sensors 26 are associated respectively to the first 23 and the second ports 24, and are suitable to detect the pressure inside each of the first 21 and respectively second chambers 22 of the actuators 13.

In the case shown in figs. 1 and 2, the first 25 and the second pressure sensors 26 are installed externally with respect to the first 21 and the second chamber 22, or on the connection pipe between the actuators 13 and the distributor valves 19.

In other forms of embodiment, it may be provided that the first 25 and the second pressure sensors 26 are installed internally to the first 21 and respectively second chamber 22, in order to directly detect the pressures acting therein.

The pressure sensors 25 and 26 can be, merely as an example, piezoelectric transducers.

The apparatus 10 according to the present invention also comprises a hydraulic control circuit 30, which is associated to the hydraulic command circuit 14 and is suitably commanded by a processing and control device 31 to provide the damping of the vibrations to which the articulated arm 11 is subjected during its functioning.

With reference to fig. 2, this shows the control circuit 30 applied only to two of the actuators 13, even if it is obvious that a similar application can be provided for the other actuators 13 as well.

Moreover, dotted lines show the flows of the electric signals processed and detected by the processing and control device 31, while continuous lines show the fluid-dynamic connections.

The control circuit 30 comprises an oil-dynamic pump 34, electro-valves 35 commanded by the processing and control device 31 and each cooperating with the distributor valves 19 and an accumulation tank 36 of operating fluid.

In some forms of embodiment, it is advantageous to provide that the tank 16 of the feed circuit 14 is common to the control circuit 30 too.

A hydraulic accumulator, not shown in the drawings, can also be associated with the control circuit 30 in the known way, and is suitable to keep the fluid under pressure in the control circuit 30 in order to reduce the response times in the control steps.

The oil-dynamic pump 34, in this case, is the axial type with a variable cubic capacity; this allows to control and maintain the working pressure in the delivery pipes always at a more or less constant value, reducing the power dissipated to a minimum value. The cubic capacity of the pump 34 is suitably adjusted by the processing and control device 31 depending on the functioning conditions imposed on the control circuit 30.

The electro-valves 35 are provided with a command portion 37 comprising, for example, proportional solenoids which are excited by electric signals, preferably current, sent by the processing and control device 31 in relation to the control activity which must be carried out.

The electro-valve 35, in this case, is the proportional four-way type and when switched allows the oil to pass in the distributor valve 19.

The distributor valve 19 therefore adjusts the passage of work fluid coming from the hydraulic feed circuit 14 during normal movement, and regulates the work fluid coming from the control circuit 30 for damping the vibrations.

Sensors are provided to determine the position assumed by the segments 12.

In this case, the sensors comprise inclinometers 40, solidly attached to the segments 12, even if in other forms of embodiment sensors may be provided to detect the reciprocal angle assumed by each segment 12 with respect to the preceding or following segment, or linear position sensors able to determine the instantaneous length of each actuator.

The signals detected by each of the inclinometers 40 are sent to the processing and control device 31 to determine the overall configuration of the articulated arm 10.

The method to control the vibrations of an articulated arm is now described.

The articulated arm 11 is moved, by means of the feed circuit 14, as a function of the signals coming from the joystick 18 and imparted by the operator to assume a desired configuration such as to allow the arm 11 to reach for example a seating where the concrete is cast.

The processing and control device 31 is able to detect the movement condition associated to the operator's command and the pumping condition and, if one of these conditions occurs, starts the method to control and damp the vibrations of the articulated arm 11. In non-working conditions, which do not cause vibration effects, and identifiable by the fact that the operator does not send movement or pumping commands for a pre-established time, it is useful that the control device, even if continuing to monitor the condition of the articulated arm 11, does not send signals to the electro-valves and sends the cubic capacity of the pump to the minimum value, in order to save fuel and wear on the components.

During the movement of the articulated arm 11, the latter, because of the effects of pitching, because of effects due to the pumping of concrete through the piping, and/or because of inertial effects of movement of the masses, is subjected to even very strong vibrations.

A step is therefore also provided, by the first 25 and second pressure sensors 26, to detect over time the pressures acting in the first chamber 21 and in the second chamber 22 of each of the actuators 13.

The signals detected substantially continuously, that is, at very small intervals of time, by the pressure sensors 25, 26 are sent to the processing and control device 31.

A step thus follows of processing the signals sent by each of the first 25 and second pressure sensors 26 during which the action is determined which must be performed on the control circuit 30 for damping the vibrations.

In particular, as a function of the pressure signals detected by the sensors 25, 26, the development and entity of the actual force acting in each chamber 21, 22 of each actuator 13 is determined. It is obvious for the person of skill that this actual force is also determined as a function of the geometric properties of each actuator 13, that is, as a function of the useful section of the head or bottom of the actuator 13.

During this processing step, it is also provided to determine the differential force, calculated as the difference between the force acting in the first chamber 21 and the force acting in the second chamber 22. This differential force, suitably processed by the processing and control device 31, supplies an indication of the entity and development of the vibrations to which the articulated arm 11 is subj ected.

More specifically, the differential force is filtered of its component of average value so as to obtain only the component of force acting on the actuator 13 due to the vibrations which arise. In particular, the filtering of the average value of the differential force between the forces acting in the two chambers 21, 22 allows to obtain only the dynamic component associated to an oscillation of the segment of the arm: this component is equal to zero when the segment is not moving, even if the absolute force inside the chambers of the cylinder can be different from zero.

Starting from this information, the processing and control device 31 determines an action step on the control circuit 30.

In particular, since the temporal development and entity of the force acting on each actuator 13 and due to the vibrations are known, the control circuit 30 is commanded to apply on the actuator 13 an input of work fluid, for example oil, into the two chambers 21, 22 such as to generate a force which opposes the force associated to the vibrations.

More specifically, the processing and control device 31 generates electric signals to be sent to the command portion 37 of the electro-valve 35 associated with the actuator 13 considered, the entity of which depends on the temporal development of the force associated to the vibration.

It is advantageous to provide that the electric signals are current signals which act by induction on the proportional solenoids of the command portion 37.

The electro-valve 35 is therefore suitably switched to send the work fluid alternately in one chamber 21 or the other 22 of the actuator 13, so as to determine the damping action.

During this action step, the processing and control device 31 also provides to regulate the functioning of the pump 34 of the control circuit 30, for example modifying its cubic capacity, in order to keep it at a constant pressure.

During this action step on the control circuit 30, the geometric configuration assumed by the segments of articulated arm 11 can be modified, even if only by a little.

The method can also comprise a step of controlling the position and configuration assumed by the articulated arm 11 during the action of damping the vibrations. This step allows to maintain the positioning of the articulated arm 11 in the position determined by the operator for the execution of the desired operations.

The step of controlling the position and configuration of the articulated arm 11 is activated after the commands set by the operator, and also as a function of the actions of damping the vibrations of the articulated arm 11.

It is advantageous to provide that the step of controlling the position and configuration is actuated after a determinate interval of time has passed, for example some seconds, since the last movement of the articulated arm 11 determined by the operator.

After this interval of time has passed, and if no further movement commands arrive from the operator, the processing and control device 31 determines the configuration assumed by the segments 12 of the articulated arm 11 on the basis of signals read by the inclinometers 40.

At the same time as this step, the actions for damping the vibrations are activated, as described above, during which there may be variations in the inclination of the individual segments 12.

More specifically, at regular intervals of time, the deviation between the position assumed initially by the articulated arm and the instantaneous position thereof is determined, which is varied due to the variations in position to which the articulated arm is subjected during the action step on the control circuit 30 for damping the vibrations.

As a function of this deviation, the processing and control device 31 provides to determine the actions which must be applied to the control circuit 30 in order to reposition and/or maintain the position of the articulated arm 11 in the configuration desired and determined by the operator.

The actions of repositioning the articulated arm 11 occur by sending signals to the electro-valves 35 of each, or at least some, of the actuators 13, which in their turn determine the passage of work fluid into one or other chamber of the actuator 13.

## Claims

1. Method to control the vibrations of an articulated arm (11) during its movement and use to carry out pumping operations of concrete, said articulated arm (11) comprising a plurality of segments (12) articulated with respect to each other, each associated with a corresponding actuator (13), comprising at least a first step of detecting the temporal development and entity of the force which acts on at least said actuator (13) due to the vibrations, and a second step during which a processing and control device (31), as a function of said force, commands the drive of a hydraulic control circuit (30) connected fluidically at least to said actuator (13) to determine the damping of said force due to the vibrations, wherein during said first detection step the development and entity of a first pressure and of a second pressure are detected, acting respectively in a first chamber (21) and in a second chamber (22) of said actuator (13), by means of respective pressure sensors (25, 26), **characterized in that** said detection step provides to determine, in real time, a differential force between the force acting in said first chamber (21) and the force acting in said second chamber (22), wherein said differential force is filtered of its component of average value so as to obtain only the dynamic component of force acting on the actuator (13) and associated to an oscillation of the related segment (12) due to the vibrations, and wherein, when the dynamic components of force due to the vibrations are different than zero, the drive of the hydraulic control circuit (30) provides an input of work fluid into the two chambers (21, 22) of the actuator (13) such as to generate a force which opposes and tends to cancel said component of the force due to the vibrations.

2. Method as in claim 1, **characterized in that** an electro-valve (35), connected fluidically with said hydraulic control circuit (30), is associated with said actuator (13), **and in that** in said second step said processing and control device (31) sends electric signals depending on the temporal development of said force due to the vibrations, for the switching of said electro-valve (35) so as to allow the intervention of said control circuit (30) on said actuator (13).

3. Method as in claim 1 or 2, wherein it is provided that the control circuit (30) comprises an oil-dynamic pump (34), electro-valves (35) commanded by said processing and control device (31) and cooperating with distributor valves (19) and an accumulation tank (36) of operating fluid, **characterized in that**, during the second step of driving the control circuit (30), the functioning of said oil-dynamic pump (34) is adjusted to maintain said control circuit (30) at a constant pressure.

4. Method as in claim 3, **characterized in that** said adjustment of the functioning of the oil-dynamic pump (34) provides to modify its cubic capacity.

5. Method as in any claim hereinbefore, **characterized in that** following the normal movement of said articulated arm (11), and during said first and second step, a step is provided to control the position and configuration of said articulated arm (11) which has been determined by the operator.

6. Method as in claim 5, **characterized in that** during said control step said processing and control device (31) detects the signals coming from sensors (40) associated with at least one segment (12) and provided to detect the position assumed by the latter.

7. Method as in claim 5 or 6, **characterized in that** in said control step the deviation between the position of the articulated arm (11) determined by the operator and the instantaneous position of said articulated arm (11) is determined and, if a deviation is determined, said processing and control device (31) determines an action on said hydraulic control circuit (30) in order to keep said articulated arm (11) in the position determined by the operator.

8. Apparatus to control the vibrations of an articulated arm (11) comprising a plurality of segments (12) articulated with respect to each other, each associated with a corresponding actuator (13), wherein detection devices (25, 26) are associated with at least one of said actuators (13) to detect the development and the entity of the force due to the vibrations, and which acts on said actuator (13), and comprising a hydraulic control circuit (30) connected fluidically to said at least one of the actuators (13), and a processing and control device (31) suitable to drive said hydraulic control circuit (30) to determine the damping of said force due to the vibrations and acting on said at least one of the actuators (13), wherein said detection devices comprise a first pressure detector (25) and a second pressure detector (26) associated respectively to a first chamber (21) and a second chamber (22) of said at least one of said actuators (13), **characterized in that** the processing and control device (31) is configured to determine in real time a differential force acting in said first chamber (21) and the force acting in said second chamber (22), and to filter said differential force of its component of average value so as to obtain only the dynamic component of force acting on the actuator (13) and associated to an oscillation of the related segment (12) due to the vibrations, and said hydraulic control circuit (30) is configured, when the dynamic components of force due to the vibrations are different than zero, to bring work fluid into one and/or the other of the two chambers (21, 22) of the actuator (13) to generate a force which opposes and tends to cancel said component of the force due to the vibrations.

9. Apparatus as in claim 8, **characterized in that** said detection devices comprise a first pressure detector (25) and a second pressure detector (26) associated respectively with a first chamber (21) and a second chamber (22) of said at least one of said actuators (13).

10. Apparatus as in claim 8, **characterized in that** said detection devices comprise load cells, extensometers configured to be associated with said actuator to carry out a direct detection of the temporal development and entity of said force due to the vibrations.

11. Apparatus as in claim 8, 9 or 10, **characterized in that** said control circuit (31) comprises at least an electro-valve (35) connected fluidically to said at least one actuator (13), **and in that** said processing and control device (31) is suitable to send electric signals, depending on the temporal development of said force due to the vibrations, for the switching of said electro-valve (35) in order to determine the action of said control circuit (30) on said actuator (13).

12. Apparatus as in any claim from 8 to 11, **characterized in that** sensors (40) are associated with each of said segments (12) to determine their position, **and in that** said processing and control device (31) provides to detect the signals deriving from said sensors (40).

## Patentansprüche

1. Verfahren zum Steuern der Schwingungen eines Gelenkarms (11) während seiner Bewegung und Verwendung zum Durchführen von Pumpvorgängen von Beton, wobei der Gelenkarm (11) eine Mehrzahl von Abschnitten (12) umfasst, die aneinander angelenkt sind, die jeweils einem entsprechenden Aktor (13) zugeordnet sind, umfassend mindestens einen ersten Schritt zum Erfassen der zeitlichen Entwicklung und Stärke der Kraft, die von Schwingungen verursacht auf mindestens einen der Aktoren (13) wirkt, und einen zweiten Schritt, während dessen eine Verarbeitungs- und Steuerungsvorrichtung (31) in Abhängigkeit von der Kraft dem Antrieb eines hydraulischen Steuerkreislaufs (30), der fluidisch mindestens mit dem Aktor (13) verbunden ist, befiehlt, die Dämpfung der von den Schwingungen verursachten Kraft zu bestimmen, wobei während des ersten Erfassungsschritts die Entwicklung und Stärke eines ersten Drucks und eines zweiten Drucks, die in einer ersten Kammer (21) bzw. in einer zweiten Kammer (22) des Aktors (13) vorherrschen, mittels entsprechender Drucksensoren (25, 26) erfasst werden, **dadurch gekennzeichnet, dass** der Erfassungsschritt vorsieht, dass eine Differenzkraft zwischen der Kraft, die in der ersten Kammer (21) vorherrscht, und der Kraft, die in der zweiten Kammer (22) vorherrscht, in Echtzeit bestimmt wird, wobei aus der Differenzkraft ihre Durchschnittswertkomponente herausgefiltert wird, um nur die dynamische Komponente der Kraft zu erhalten, die auf den Aktor (13) wirkt und einer von den Schwingungen verursachten Schwankung des entsprechenden Abschnitts (12) zugeordnet ist, und wobei, wenn sich die dynamischen Komponenten der von den Schwingungen verursachten Kraft von null unterscheiden, der Antrieb des hydraulischen Steuerkreislaufs (30) ein Einleiten einer Arbeitsflüssigkeit in die beiden Kammern (21, 22) des Aktors (13) vorsieht, um so eine Kraft zu erzeugen, die der Komponente der von den Schwingungen verursachten Kraft entgegenwirkt und sie tendenziell aufhebt.

2. Verfahren gemäß Anspruch 1, **dadurch gekennzeichnet, dass** ein Magnetventil (35), das fluidisch mit dem hydraulischen Steuerkreislauf (30) verbunden ist, dem Aktor (13) zugeordnet ist, und dass in dem zweiten Schritt die Verarbeitungs- und Steuerungsvorrichtung (31) elektrische Signale, die von der zeitlichen Entwicklung der von den Schwingungen verursachten Kraft abhängen, für das Schalten des Magnetventils (35) sendet, um so zu ermöglichen, dass der Steuerkreislauf (30) auf den Aktor (13) einwirkt.

3. Verfahren gemäß Anspruch 1 oder 2, wobei es vorgesehen ist, dass der Steuerkreislauf (30) eine dynamische Ölpumpe (34), Magnetventile (35), die von der Verarbeitungs- und Steuerungsvorrichtung (31) befehligt werden und mit Verteilerventilen (19) zusammenarbeitet, und einen Speicherbehälter (36) für Betriebsflüssigkeit umfasst, **dadurch gekennzeichnet, dass** während des zweiten Schritts zum Antreiben des Steuerkreislaufs (30) die Funktion der dynamischen Ölpumpe (34) so eingestellt wird, dass der Steuerkreislauf (30) auf einem konstanten Druck gehalten wird.

4. Verfahren gemäß Anspruch 3, **dadurch gekennzeichnet, dass** die Einstellung der Funktion der dynamischen Ölpumpe (34) vorsieht, dass ihr Hubvolumen modifiziert wird.

5. Verfahren gemäß einem der vorhergehenden Ansprüche, **dadurch gekennzeichnet, dass** nach der normalen Bewegung des Gelenkarms (11), und während des ersten und zweiten Schritts ein Schritt vorgesehen ist, um die Position und Konfiguration des Gelenkarms (11) zu steuern, die von der Bedienperson bestimmt wurde.

6. Verfahren gemäß Anspruch 5, **dadurch gekennzeichnet, dass** während des Steuerungsschritts die Verarbeitungs- und Steuerungsvorrichtung (31) die Signale erfasst, die von den Sensoren (40) kommen, die mindestens einem Abschnitt (12) zugeordnet sind und dazu vorgesehen sind, die von diesem eingenommene Position zu erfassen.

7. Verfahren gemäß Anspruch 5 oder 6, **dadurch gekennzeichnet, dass** in dem Steuerschritt die Abweichung zwischen der Position des Gelenkarms (11), die von der Bedienperson bestimmt wird, und der momentanen Position des Gelenkarms (11) bestimmt wird und, wenn eine Abweichung festgestellt wird, die Verarbeitungs- und Steuerungsvorrichtung (31) eine Aktion an dem hydraulischen Steuerkreislauf (30) bestimmt, um den Gelenkarm (11) in der von der Bedienperson bestimmten Position zu halten.

8. Vorrichtung zum Steuern der Schwingungen eines Gelenkarms (11), umfassend eine Mehrzahl von Abschnitten (12), die aneinander angelenkt sind, die jeweils einem entsprechenden Aktor (13) zugeordnet sind, wobei Erfassungsvorrichtungen (25, 26) mindestens einem der Aktoren (13) zugeordnet sind, um die Entwicklung und Stärke der Kraft zu erfassen, die von den Schwingungen verursacht wird und auf den Aktor (13) wirkt, und einen hydraulischen Steuerkreislauf (30), der fluidisch mit dem mindestens einen Aktor (13) verbunden ist, und eine Verarbeitungs- und Steuerungsvorrichtung (31) umfasst, die dazu geeignet ist, den hydraulischen Steuerkreislauf (30) anzutreiben, um die Dämpfung der von den Schwingungen verursachten und auf den mindestens einen Aktor (13) wirkenden Kraft zu bestimmen, wobei die Erfassungsvorrichtungen einen ersten Druckdetektor (25) und einen zweiten Druckdetektor (26) umfassen, die einer ersten Kammer (21) bzw. einer zweiten Kammer (22) des mindestens einen der Aktoren (13) zugeordnet sind, **dadurch gekennzeichnet, dass** die Verarbeitungs- und Steuerungsvorrichtung (31) dazu konfiguriert ist, eine Differenzkraft zwischen der Kraft, die in der ersten Kammer (21) vorherrscht, und der Kraft, die in der zweiten Kammer (22) vorherrscht, in Echtzeit zu bestimmen, und aus der Differenzkraft ihre Durchschnittswertkomponente herauszufiltern, um nur die dynamische Komponente der Kraft zu erhalten, die auf den Aktor (13) wirkt und einer von den Schwingungen verursachten Schwankung des entsprechenden Abschnitts (12) zugeordnet ist, und der hydraulische Steuerkreislauf (30) dazu konfiguriert ist, wenn sich die dynamischen Komponenten der von den Schwingungen verursachten Kraft von null unterscheiden, eine Arbeitsflüssigkeit in eine und/oder die andere der beiden Kammern (21, 22) des Aktors (13) einzuleiten, um so eine Kraft zu erzeugen, die der Komponente der von den Schwingungen verursachten Kraft entgegenwirkt und sie tendenziell aufhebt.

9. Vorrichtung gemäß Anspruch 8, **dadurch gekennzeichnet, dass** die Erfassungsvorrichtungen einen ersten Druckdetektor (25) und einen zweiten Druckdetektor (26) umfassen, die einer ersten Kammer (21) bzw. einer zweiten Kammer (22) des mindestens einen Aktors (13) zugeordnet sind.

10. Vorrichtung gemäß Anspruch 8, **dadurch gekennzeichnet, dass** die Erfassungsvorrichtungen Kraftmesszellen, Ausdehnungsmesser, die dazu konfiguriert sind, dem Aktor zugeordnet zu sein, umfassen, um eine direkte Erfassung der zeitlichen Entwicklung und Stärke der von den Schwingungen verursachten Kraft durchzuführen.

11. Vorrichtung gemäß Anspruch 8, 9 oder 10, **dadurch gekennzeichnet, dass** der Steuerkreislauf (31) mindestens ein Magnetventil (35) umfasst, das fluidisch mit dem mindestens einen Aktor (13) verbunden ist, und dass die Verarbeitungs- und Steuerungsvorrichtung (31) dazu geeignet ist, elektrische Signale zu senden, die von der zeitlichen Entwicklung der von den Schwingungen verursachten Kraft abhängen, für das Schalten des Magnetventils (35), um so die Wirkung des Steuerkreislaufs (30) auf den Aktor (13) zu bestimmen.

12. Vorrichtung gemäß einem der Ansprüche 8 bis 11, **dadurch gekennzeichnet, dass** Sensoren (40) jedem der Abschnitte (12) zugeordnet sind, um ihre Position zu bestimmen, und dass die Verarbeitungs- und Steuerungsvorrichtung (31) vorsieht, dass sie die Signale erfasst, die von den Sensoren (40) herrühren.

## Revendications

1. Procédé de régulation des vibrations d'un bras articulé (11) durant son déplacement et son utilisation pour exécuter des opérations de pompage de ciment, ledit bras articulé (11) comprenant une pluralité de segments (12) articulés les uns aux autres, chacun étant associé à un organe d'actionnement correspondant (13), comprenant au moins une première étape consistant à détecter le développement temporel et l'entité de la force qui agit au moins sur ledit organe d'actionnement (13) en raison des vibrations, et une deuxième étape durant laquelle un dispositif de traitement et de commande (31), en fonction de ladite force, commande le pilotage d'un circuit de commande hydraulique (30) connecté de manière fluidique au moins audit organe d'actionnement (13) pour déterminer l'absorption de ladite force due aux vibrations, dans lequel durant ladite première étape de détection, le développement et l'entité d'une première pression et d'une deuxième pression sont détectés, en agissant respectivement dans une première chambre (21) et dans une deuxième chambre (22) dudit organe d'actionnement (13), au moyen de capteurs de pression correspondants (25, 26), **caractérisé en ce que** ladite étape de détection prévoit de déterminer, en temps réel, un différentiel de force entre la force agissant dans ladite première chambre (21) et la force agissant dans ladite deuxième chambre (22), ledit différentiel de force étant débarrassé de sa composante de valeur moyenne de manière à obtenir uniquement la composante dynamique de la force agissant sur l'organe d'actionnement (13) et associée à une oscillation du segment concerné (12) due aux vibrations, et dans lequel, lorsque les composantes dynamiques de la force due au vibrations sont différentes de zéro, le pilotage du circuit de commande hydraulique (30) fournit une donnée de fluide de travail dans les deux chambres (21, 22) de l'organe d'actionnement (13), de manière à générer une force qui s'oppose et tend à annuler ladite composante de la force due aux vibrations.

2. Procédé selon la revendication 1, **caractérisé en ce qu'**une électrovanne (35), connectée de manière fluidique audit circuit de commande hydraulique (30), est associée audit organe d'actionnement (13), **et en ce que** dans ladite deuxième étape, ledit dispositif de traitement et de commande (31) envoie des signaux électriques dépendant du développement temporel de ladite force due aux vibrations, pour la commutation de ladite électrovanne (35) de manière à permettre l'intervention dudit circuit de commande (30) sur ledit organe d'actionnement (13).

3. Procédé selon l'une des revendications 1 et 2, dans lequel il est prévu que le circuit de commande (30) comprenne une pompe dynamique à huile (34), des électrovannes (35) commandées par ledit dispositif de traitement et de commande (31) et coopérant avec des soupapes de distribution (19) et un réservoir d'accumulation (36) de fluide fonctionnel, **caractérisé en ce que**, durant la deuxième étape de pilotage du circuit de commande (30), le fonctionnement de ladite pompe dynamique à huile (34) est réglé pour maintenir ledit circuit de commande (30) à une pression constante.

4. Procédé selon la revendication 3, **caractérisé en ce que** ledit réglage du fonctionnement de la pompe dynamique à huile (34) prévoit de modifier sa capacité cubique.

5. Procédé selon l'une quelconque des revendications précédentes, **caractérisé en ce que**, suite au mouvement normal dudit bras articulé (11) et durant lesdites première et deuxième étapes, une étape est prévue pour commander la position et la configuration dudit bras articulé (11) qui a été déterminée par l'opérateur.

6. Procédé selon la revendication 5, **caractérisé en ce que**, durant ladite étape de commande, ledit dispositif de traitement et de commande (31) détecte les signaux provenant des détecteurs (40) associés avec au moins un segment (12) et prévus pour détecter la position occupée par ce dernier.

7. Procédé selon la revendication 5 ou 6, **caractérisé en ce que** durant ladite étape de commande, la déviation entre la position du bras articulé (11) déterminée par l'opérateur et la position instantanée dudit bras articulé (11) est déterminée et, s'il y a une déviation, ledit dispositif de traitement et de commande (31) détermine une action sur ledit circuit de commande hydraulique (30) afin de maintenir ledit bras articulé (11) dans la position déterminée par l'opérateur.

8. Appareil de régulation des vibrations d'un bras articulé (11) comprenant une pluralité de segments (12) articulés les uns aux autres, chacun étant associé avec un organe d'actionnement correspondant (13), dans lequel des dispositifs de détection (25, 26) sont associés avec au moins l'un desdits organes d'actionnement (13) pour détecter le développement et l'entité de la force due aux vibrations, laquelle agit sur ledit organe d'actionnement (13), et comprenant un circuit de commande hydraulique (30) connecté de manière fluide à au moins l'un des organes d'actionnement (13), et un dispositif de traitement et de commande (31) apte à piloter ledit circuit de commande hydraulique (30) pour déterminer l'absorption de ladite force due aux vibrations et agissant sur ledit organe d'actionnement (13), ledit dispositif de détection comprenant un premier capteur de pression (25) et un deuxième capteur de pression (26) associés respectivement à une première chambre (21) et à une deuxième chambre (22) dudit organe d'actionnement (13), **caractérisé en ce que** le dispositif de traitement et de commande (31) est configuré pour déterminer en temps réel un différentiel de force agissant dans ladite première chambre (21) et la force agissant dans ladite deuxième chambre (22), et pour débarrasser ladite force différentielle de sa composante de valeur moyenne de manière à obtenir uniquement la composante dynamique de force agissant sur l'organe d'actionnement (13) et associée à une oscillation du segment concerné (12) due aux vibrations, et ledit circuit de commande hydraulique (30) est configuré, quand les composantes dynamiques de force dues aux vibrations sont différentes de zéro, pour amener du fluide de travail dans l'une et/ou l'autre des deux chambres (21, 22) de l'organe d'actionnement (13) pour générer une force qui s'oppose et tend à annuler ladite composante de la force due aux vibrations.

9. Appareil selon la revendication 8, **caractérisé en ce que** ledit dispositif de détection comprend un premier capteur de pression (25) et un deuxième capteur de pression (26) associés respectivement à une première chambre (21) et à une deuxième chambre (22) dudit ou desdits organes actionnement (13).

10. Appareil selon la revendication 8, **caractérisé en ce que** ledit dispositif de détection comprend des cellules de charge, des extensomètres configurés pour être associés audit organe d'actionnement pour effecteur une détection directe du développement temporel et de l'entité de ladite force due aux vibrations.

11. Appareil selon la revendication 8, 9 ou 10, **caractérisé en ce que** ledit circuit de commande (31) comprend au moins une électrovanne (35) connectée de manière fluidique au(x)dit(s) organe(s) d'actionnement (13), **et en ce que** ledit dispositif de traitement et de commande (31) est apte à envoyer des signaux électriques dépendant du développement temporel de ladite force due aux vibrations, pour la commutation de ladite électrovanne (35), afin de déterminer l'action dudit circuit de commande (30) sur ledit organe d'actionnement (13).

12. Appareil selon l'une quelconque des revendications 8 à 11, **caractérisé en ce que** des détecteurs (40) sont associés avec chacun desdits segments (12) pour déterminer leur position **et en ce que** ledit dispositif de traitement et de commande (31) procède à la détection des signaux provenant desdits détecteurs (40).
